(19) Europäisches Patentamt
European Patent Office
Office européen des brevets

(11) Veröffentlichungsnummer: **0 104 417**
**A2**

(12) # EUROPÄISCHE PATENTANMELDUNG

(21) Anmeldenummer: **83108227.6**

(22) Anmeldetag: **20.08.83**

(51) Int. Cl.$^3$: **C 08 G 73/14**
C 08 G 18/34, C 08 G 18/20
C 09 D 3/49

(30) Priorität: **01.09.82 DE 3232464**

(43) Veröffentlichungstag der Anmeldung:
**04.04.84 Patentblatt 84/14**

(84) Benannte Vertragsstaaten:
**AT DE FR GB IT**

(71) Anmelder: **BAYER AG**
**Konzernverwaltung RP Patentabteilung**
**D-5090 Leverkusen 1 Bayerwerk(DE)**

(72) Erfinder: **Zecher, Wilfried, Dr.**
**Treptower Strasse 6**
**D-5090 Leverkusen 1(DE)**

(72) Erfinder: **Merten, Rudolf, Dr.**
**Berta-von-Suttner-Strasse 55**
**D-5090 Leverkusen 1(DE)**

(72) Erfinder: **Dünwald, Willi, Dr.**
**Geschwister-Scholl-Strasse 16**
**D-5090 Leverkusen 1(DE)**

(54) **Verfahren zur Herstellung von Polyamidimiden.**

(57) Die Erfindung beschreibt ein neues Verfahren zur Herstellung von Polyamidimiden unter Verwendung von substituierten Imidazolen als Katalysator.

EP 0 104 417 A2

BAYER AKTIENGESELLSCHAFT 5090 Leverkusen, Bayerwerk

Zentralbereich
Patente, Marken und Lizenzen Eck/ABc

## Verfahren zur Herstellung von Polyamidimiden

Die Erfindung betrifft ein Verfahren zur Herstellung von Polyamidimiden.

Es ist bereits bekannt, daß man aliphatisch-aromatische Polyamidimide erhält, wenn organische Polyisocyanate mit zyklischen Polycarbonsäureanhydriden, z.B. Trimellitsäureanhyd und Lactamen zur Kondensation gebracht werden (DE-OS 1 770 202). Die Reaktionsprodukte zeichnen sich durch besondere Eigenschaften, so die Löslichkeit der Vorkondensate in phenolischen Lösungsmitteln und gute Elastizitätswerte aus. Sie finden Verwendung als hochtemperaturbeständige Beschichtungen z.B. auf dem Elektroisolierlack-Sektor.

Es wurde nun gefunden, daß man Polymere mit wesentlich verbesserten Eigenschaften erhält, wenn die Kondensation von organischen Polyisocyanaten wie aliphatischen, aliphatisch-aromatischen und aromatischen Diisocyanaten mit Lactamen und zyklischen Polycarbonsäureanhydriden bei Temperaturen von 0-450° und gegebenenfalls in einem Lösungsmittel, in Gegenwart von 0,01-5, vorzugsweise von 0,2-2 Gew.-% eines 2-Alkylimidazols durchgeführt wird.

Die Reaktionsprodukte zeichnen sich durch eine Erhöhung der Erweichungstemperaturen aus, die für ein aliphatischaromatisches System nicht zu erwarten war. Dies konnte bis dahin auch durch andere Maßnahmen, z.B. den Einbau von Isocyanuraten, wie dies in DE-OS 2 542 706 beschrieben wird, nicht erreicht werden, ohne daß die übrigen Eigenschaften wie Elastizität und Abriebfestigkeit verschlechtert wurden. In der Drahtlackierung wird so bei gleichen Eigenschaften eine wesentliche Erhöhung der Lackiergeschwindigkeit ermöglicht.

Im erfindungsgemäßen Verfahren können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylen-methylen-struktur, technische Gemische aus Toluylendiisocyanten, m-Phenylendiisocyanat und die symmetrischen Verbindungen 4,4'-Diisocyanato-diphenylmethan, 4,4'-Diisocyanato-diphenylether, Naphtylen-(1,5)-diisocyanat, p-Phenylendiisocyanat, 4,4'-Diisocyanato-diphenyl-dimethylmethan, analoge hydroaromatische Diisocyanate, sowie aliphatische Diisocyanate mit 2-12 C-Atomen wie Hexamethylendiisocyanat und von Isophoron abgeleitete Diisocyanate.

An Stelle der Isocyanate können auch Verbindungen eingesetzt werden, die unter den Reaktionsbedingungen als

Isocyanate reagieren, vorzugsweise die Additionsverbindungen von Phenolen und Lactamen, z.B. von Phenol, technischen Kresolgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können.

Als erfindungsgemäße zyklische Polycarbonsäureanhydride können Verbindungen verwendet werden, wie sie in DE-OS 1 770 202 und DE-OS 2 542 706 beschrieben werden, vorzugsweise Polycarbonsäureanhydride der allgemeinen Formel (I)

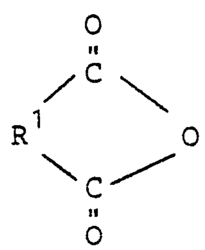

(I),

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt,

bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlaufe der Reaktion in die Säureanhydride übergehen.

Erfindungsgemäß verwendbare Lactame sind beispielsweise solche der Formel (II)

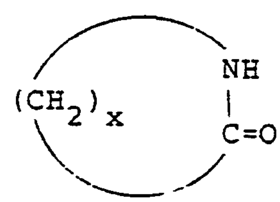

(II),

in welcher

X eine ganze Zahl von 2 bis 20 bedeutet.

Vorzugsweise werden Caprolactam und Dodecanlactam eingesetzt.

Weiterhin können beispielsweise anstelle der Lactame Polyamide wie Polycapronamid oder Polydodecansäureamid eingesetzt werden, wie dies z.B. in der DE-OS 1 956 612 beschrieben ist.

Als Katalysator wird erfindungsgemäß ein 2-substituiertes Imidazol wie ein 2-Alkylimidazol der Formel (III)

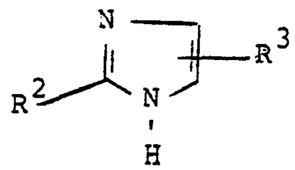

(III),

in welcher

$R^2$ ein geradkettig oder verzweigter Alkylrest mit 1 bis 20 C-Atomen bedeutet, der gegebenenfalls mit einem aromatischen Rest mit 6 bis 10 C-Atomen substituiert sein kann,

$R^3$ Wasserstoff, einen Alkylrest mit 1 bis 20 C-Atomen, einen Aralkylrest mit 6 bis 10 C-Atomen im Arylteil und 1 bis 10 C-Atomen im Alkylteil oder einen Arylrest mit 6 bis 10 C-Atomen bedeutet,

eingesetzt.

Vorzugsweise werden 2-Alkylimidazole der Formel (III) eingesetzt, in der $R^2$ für einen geradkettig oder verzweigten Alkylrest mit 1 bis 10 C-Atomen und $R^3$ für Wasserstoff steht. Besonders bevorzugt wird das 2-Methylimidazol.

Die erfindungsgemäße Reaktion kann in Lösungsmitteln, die unter den Reaktionsbedingungen mit dem Komponenten

nicht reagieren oder nur lockere Additionsverbindungen bilden, ausgeführt werden. Geeignete Lösungsmittel sind beispielsweise (Halogen)-Kohlenwasserstoffe, Phenole, Alkohole, Ester, Lactame, Ketone, Ether, substituierte Amide, Nitrile, Phosphorsäureamide, Sulfoxide und Sulfone. Beispielsweise seien genannt Xylole, o-Dichlorbenzol, Benzoesäurealkylester, Butyrolacton, Caprolacton, Acetophenon, Cyclohexanon, Benzylalkohol, Ethylenglykol, Glykolmonomethyletheracetat, Diethylenglykolmonoethylether, Diethylenglykoldimethylether, Dimethylformamid, N-Methylpyrrolidon, Benzonitril, Hexamethylphosphorsäuretriamid, Dimethylsulfoxid, Tetramethylensulfon und deren Gemische. Bevorzugt werden Phenole wie Phenol und technische Gemische aus o-, m- u. p-Kresol als Lösungsmittel eingesetzt.

Zur Durchführung des erfindungsgemäßen Verfahrens werden die Reaktionskomponenten mit oder ohne Lösungsmittel einige Minuten bis zu mehreren Stunden bei Temperaturen von 0 bis 380°C gehalten. Der Verlauf der Reaktion läßt sich beispielsweise über die Gasentwicklung, den Anstieg der Viskosität und die JR-Spektren verfolgen.

Es ist zuweilen vorteilhaft, die Reaktion in mehreren Stufen durchzuführen oder die einzelnen Komponenten in unterschiedlicher Reihenfolge oder bei verschiedenen Temperaturen zuzugeben. Es hat sich als besonders vorteilhaft erwiesen, ohne den erfindungsgemäßen Katalysator bei Temperaturen von etwa 50 bis 220°C ein Vorkondensat aus Polyisocyanat, cyclischen Carbonsäureanhydrid und Lactam herzustellen, das dann nach Zugabe des erfindungsgemäßen Katalysators bei Temperaturen von etwa 170 bis 450°C, gegebenenfalls unter Verdampfen des Lösungsmittels, auskondensiert wird.

Im allgemeinen werden pro Val Isocyanat ein Val Carbonsäure oder zyklisches Carbonsäureanhydrid und pro Val Carbonsäureanhydrid ein Val Lactam zur Umsetzung gebracht.

Eine weitere mögliche Ausführungsform besteht darin, überschüssiges Isocyanat mit Di- oder Tricarbonsäuren wie z.B. Adipinsäure, Terephthalsäure, Isophthalsäure oder Trimesinsäure oder mit Polyglycinestern wie Bis-/methoxy-carbonyl-isopropyl-amino-phenyl-(4)7-methan zur Reaktion zu bringen.

Die erfindungsgemäße Reaktion kann durch zusätzliche Katalysatoren beeinflußt werden, z.B. durch Amine wie Triethylamin, 1,4-Diazabicyclo-(2,2,2)-octan und N-Ethylmorpholin und N-Methylimidazol, durch anorganische und organische Metallverbindungen, insbesondere Verbindungen des Eisens, Bleis, Zinks, Zinns, Kupfers, Kobalts und Titans wie Eisen (III)-chlorid, Kobaltacetat, Bleioxid, Bleiacetat, Zinnoctoat, Dibutyl-zinn-dilaurat, Kupferacetylacetonat, Titantetrabutylat, Alkali-phenolate und Natriumcyanid, durch Phosphorverbindungen wie Trialkylphosphin und Methylphospholinoxid etc.

Die nach dem erfindungsgemäßen Verfahren herstellbaren Polyamidimide zeichnen sich durch besondere Temperaturbeständigkeit und hohe Erweichungstemperaturen aus und sind geeignet als Lacke, Folien und Formkörper. Ihre

Eigenschaften können für die verschiedenen Einsatzgebiete durch Änderung der stöchiometrischen Verhältnisse, des Kondensationsgrades und durch Zusatz von Füllstoffen, Pigmenten und nieder- und hochmolekularen Komponenten variiert werden.

Beispiele

1.1. Herstellung des Ausgangsmaterials:

In die Lösung von 113 g Caprolactam in 190 g Phenol und 190 g eines technischen Kresolgemisches wurden bei 120-130° anteilweise unter Kühlung 250 g 4,4-Diisocyanato-diphenylmethan und dann 192 g Trimellitsäureanhydrid eingetragen. Die Temperatur wurde nun gesteigert und das Gemisch 3 Std. bei 170°C, 2 Std. bei 190°C und 4 Std. bei 205°C gerührt. Die Kondensation erfolgte unter Abspaltung von Kohlendioxid. Anschließend wurden unter Vakuum 260 g Phenol/Kresol abdestilliert. Das Reaktionsprodukt erstarrte nach dem Ausgießen beim Abkühlen zu einem klaren spröden Harz mit einem Festgehalt von ca. 80 Gew.-%.

Die Viskosität einer 15 %igen Lösung in Kresol $\eta^{25}$ beträgt 650 mPas.

1.2. Herstellung des Polyamidimids

250 g des nach 1.1. hergestellten Harzes wurden in 500 g Phenol/Kresol (1:1) gelöst, dann wurden 2 g 2-Methylimidazol, gelöst in 10 g Kresol, eingerührt.

Mit dieser Lackmischung wurde ein Cu-Draht von 0,7 $^{m}/_{m}$ Durchmesser auf eine Durchmesserzunahme von 45-50 µm lackiert.

Lackierbedingungen:

| | |
|---|---|
| Ofentyp: | Vertikalofen |
| Ofenlänge: | 4 Meter |
| Ofentemperatur: | 400°C |

Ein Cu-Lackdraht, dessen Isolierung eine Dauerwärmebeständigkeit $>$1550°C aufweist, darf nur eine geringe Thermoplastizität besitzen, d.h. seine Isolationsschicht darf erst bei Temperaturen $>$300°C erweichen.

Ein Einbrenngrad, der bei dieser Prüfung Werte $<$ 300°C erbringt, ist deshalb unzureichend. Darauf muß bei der Wahl der Lackiergeschwindigkeit geachtet werden.

Bei fixierter Temperatur im Einbrennschacht, ist die Verweilzeit des Drahtes bestimmend für den Einbrenn- und damit für den Vernetzungsgrad. Je höher die Lackiergeschwindigkeit um so geringer demzufolge der Vernetzungsgrad.

Im oben beschriebenen Drahtlackierversuch wurde bei der Lackiergeschwindigkeit von 10 Meter/min eine Erweichungstemperatur von 375°C (DIN 46 453 10.2) gemessen.

Wird die Lackierung ohne den Katalysator durchgeführt werden lediglich 280°C gemessen.

Patentansprüche

1. Verfahren zur Herstellung von Kondensationsprodukten aus organischen Polyisocyanaten, Lactamen und zyklischen Polycarbonsäureanhydriden bei Temperaturen von 0 bis 450°C, dadurch gekennzeichnet, daß die Umsetzung in Gegenwart eines 2-substituierten Imidazols als Katalysator durchgeführt wird.

2. Verfahren nach Anspruch 1, dadurch gekennzeichnet, daß bei einer Temperatur von 50 bis 220°C ein Vorkondensat aus Polyisocyanat, cyclischen Carbonsäureanhydrid und Lactam hergestellt wird und nach Zugabe des Katalysators bei einer Temperatur von 170-450°C weiter umgesetzt wird.

3. Verfahren nach Anspruch 1, dadurch gekennzeichnet, daß ein substituiertes Imidazol der Formel

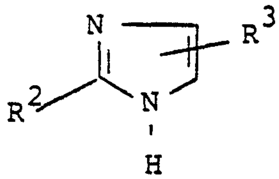

in welcher

$R^2$ ein geradkettig oder verzweigter Alkylrest mit 1 bis 20 C-Atomen, der gegebenenfalls mit einem aromatischen Rest mit 6 C-Atomen substituiert sein kann bedeutet und

$R^3$ Wasserstoff, einen Alkylrest mit 1 bis 20 C-Atomen, einen Aralkylrest mit 6 bis 10 C-Atomen im Arylteil und 1 bis 10 C-Atomen im

Alkylteil oder einen Arylrest mit 6 bis 10 C-Atomen bedeutet.

4. Verfahren nach Anspruch 1, dadurch gekennzeichnet, daß 2-Methylimidazol als Katalysator verwendet werden.

5. Verfahren nach Ansprüchen 1 und 2, dadurch gekennzeichnet, daß in einem Lösungsmittel umgesetzt wird.

6. Verfahren nach Anspruch 1, dadurch gekennzeichnet, daß ein phenolisches Lösungsmittel verwendet wird.

7. Verfahren nach Anspruch 1, dadurch gekennzeichnet, daß ein cyclisches Polycarbonsäureanhydrid der Formel

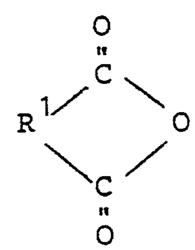

in welcher

$R^1$ einen gegebenenfalls substituierten aliphatischen $C_2$-$C_{20}$-Rest, cycloaliphatischen $C_5$-$C_{10}$-Rest, ein aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt,

verwendet wird.

8. Verfahren nach Anspruch 1, dadurch gekennzeichnet, daß als cyclisches Carbonsäureanhydrid Trimellitsäuranhydrid verwendet wird.

9. Polykondensate erhalten nach den Verfahren der Ansprüche 1 und 2.

10. Verwendung der Polykondensate nach Anspruch 1 als Lacke, Folien und Formkörper.